# FASCICULE DE BREVET EUROPEEN

(11) **EP 4 116 126 B1**
(45) Date de publication et mention de la délivrance du brevet: **15.05.2024**
(21) Numéro de dépôt: 22181428.8
(22) Date de dépôt: 28.06.2022
(51) Int. Cl.: B60K 11/08

(54) **DISPOSITIF D'OBTURATION D'ENTRÉE D'AIR POUR UN VÉHICULE AUTOMOBILE AVEC SYSTÈME DE RAPPEL AUTOMATIQUE**
LUFTEINLASSVERSCHLUSSVORRICHTUNG FÜR EIN KRAFTFAHRZEUG MIT AUTOMATISCHEM RÜCKSTELLSYSTEM
AIR INLET SHUTTER DEVICE FOR A MOTOR VEHICLE WITH AUTOMATIC RETURN SYSTEM

(30) Priorité: 05.07.2021 FR 2107228
(43) Date de publication de la demande: 11.01.2023
(73) Titulaire: VALEO SYSTEMES THERMIQUES, 78320 Le Mesnil Saint-Denis (FR)
(72) Inventeur: MINERO RAMALES, Victor Manuel, 78322 Le Mesnil-Saint-Denis Cedex (FR); VACCA, Frederic, 78322 Le Mesnil-Saint-Denis Cedex (FR); ARAB, Karim, 78322 Le Mesnil-Saint-Denis Cedex (FR); MARION, Laura, 78322 Le Mesnil-Saint-Denis Cedex (FR); GERBER, Sylvain, 78322 Le Mesnil-Saint-Denis Cedex (FR)
(74) Mandataire: Valeo Systèmes Thermiques

(56) Documents cités:
- DE-A1- 3 701 584
- DE-A1-102014 109 342
- FR-A1- 2 738 779

## Description

L'invention concerne un dispositif d'obturation d'entrée d'air pour véhicule automobile. L'invention est en particulier destinée à équiper une face avant dudit véhicule pour faciliter ou au contraire pour obturer le passage d'un flux d'air à l'intérieur d'un module de refroidissement agencé au sein du véhicule automobile. Le flux d'air est plus particulièrement destiné à circuler au sein d'un ou de plusieurs échangeurs de chaleur aménagés à l'intérieur dudit module de refroidissement.

Il est courant d'utiliser un tel dispositif d'obturation d'entrée d'air pour réduire le coefficient de traînée et aussi pour améliorer les performances de refroidissement et de climatisation au sein d'un véhicule automobile. Un tel dispositif d'obturation peut notamment comprendre au moins un rideau apte à se déplacer entre une position fermée dans laquelle il obture une ouverture de passage du flux d'air et une position ouverte dans laquelle le flux d'air est en mesure de circuler à travers cette même ouverture de passage. Un tel dispositif est le plus souvent désigné par l'acronyme ACS provenant de l'expression de langue anglaise « Active Curtain Shutter ».

L'ACS est de préférence installé au niveau d'une calandre du véhicule automobile. En position d'ouverture du rideau, l'air peut circuler à travers la calandre et participer notamment au refroidissement du moteur du véhicule automobile. En position de fermeture du rideau, l'air ne pénètre pas via la calandre, ce qui réduit la traînée et permet ainsi de réduire la consommation de carburant et l'émission de dioxyde de carbone. L'ACS permet donc de réduire la consommation d'énergie et la pollution lorsque le moteur n'a pas besoin d'être refroidi par l'air extérieur.

Le rideau d'un ACS est généralement flexible, ce qui permet de le stocker de manière compacte en l'enroulant sur lui-même autour d'un arbre enrouleur lorsqu'il adopte sa position ouverte. L'arbre enrouleur est généralement fixé le long d'un des côtés de l'ouverture de passage de l'ACS et relié à un dispositif d'entraînement de sorte à enrouler le rideau autour dudit arbre enrouleur pour l'amener en position ouverte et de sorte à dérouler le rideau pour l'amener en position fermée.

En cas de casse ou de blocage du dispositif d'entraînement, il se peut que le rideau reste bloqué dans sa position fermée, or un tel blocage du rideau dans cette position peut limiter la circulation du flux d'air et impacter négativement les performances des échangeurs de chaleur au sein du module de refroidissement.

Des dispositifs d'obturation sont connus des documents DE 10 2014 109342 A1, DE 37 01 584 A1 et FR 27 38 779 A1.

Le but de la présente invention est donc de remédier au moins partiellement aux inconvénients de l'art antérieur et de proposer un ACS amélioré qui permet de ramener le rideau dans sa position ouverte même en cas de défaillance du dispositif d'entraînement.

La présente invention concerne donc un dispositif d'obturation d'entrée d'air pour un véhicule automobile, le dispositif d'obturation comprenant un cadre support comportant une première et une deuxième traverse parallèles entre elles et reliées par des montants latéraux de sorte à définir au moins une ouverture de passage d'un flux d'air entrant, ledit dispositif comportant au moins un rideau mobile entre une position fermée dans laquelle le rideau recouvre au moins partiellement l'ouverture de passage et une position ouverte dans laquelle ledit rideau laisse passer le flux d'air entrant au travers de l'ouverture de passage, ledit rideau comportant une bordure fixée à un arbre enrouleur s'étendant sur le cadre support le long d'un des côtés de l'ouverture de passage, l'arbre enrouleur étant relié à un dispositif d'entraînement de sorte à enrouler le rideau autour dudit arbre enrouleur pour l'amener en position ouverte et de sorte à dérouler le rideau pour l'amener en position fermée, le dispositif d'obturation comprenant également un système de rappel automatique du rideau, caractérisé en ce que le système de rappel automatique du rideau comporte :
- un élément élastique en élongation selon l'axe d'enroulement de l'arbre enrouleur, ledit élément élastique étant fixé à une première de ses extrémités à l'arbre enrouleur de sorte à être entraîné en rotation par ledit arbre enrouleur et inversement,
- un coulisseau cylindrique destiné à se déplacer en translation le long de l'axe d'enroulement de l'arbre enrouleur et en rotation autour de ce même axe, ledit coulisseau étant fixé à une deuxième extrémité de l'élément élastique de sorte à être entraîné indirectement en rotation par l'arbre enrouleur et inversement, ledit coulisseau comportant également sur sa surface externe une gorge hélicoïdale, le cadre support comportant un doigt fixe configuré pour être inséré dans la gorge hélicoïdale du coulisseau.

Grâce à l'énergie élastique stockée au sein de l'élément élastique du système de rappel du rideau lors du passage de celui-ci de la position ouverte à la position fermée et grâce à la cinématique du coulisseau lié indirectement à l'arbre enrouleur via l'élément élastique, il est possible d'entraîner en rotation l'arbre enrouleur via le système de rappel automatique de manière à forcer le rideau à adopter sa position ouverte pour permettre au flux d'air de circuler à travers l'ouverture de passage, même si le dispositif d'entraînement n'est pas opérationnel. Le système de rappel automatique permet ainsi de rapatrier le rideau dans sa position ouverte afin de libérer l'ouverture de passage à travers le cadre du dispositif, permettant ainsi la circulation du flux d'air au sein du module de refroidissement comprenant un ou plusieurs échangeurs de chaleur, évitant ainsi au moteur du véhicule automobile de chauffer de manière abusive.

L'invention peut en outre comprendre un ou plusieurs des aspects suivants pris seuls ou en combinaison :
- l'élément élastique du système de rappel automatique du rideau est un ressort comportant des spires enroulées en hélice autour de l'axe d'enroulement de l'arbre enrouleur ;
- l'élément élastique est un ressort de traction ;
- le coulisseau cylindrique présente à son extrémité liée à l'élément élastique une paroi formant un volume de logement destiné à accueillir au moins une partie des spires de l'élément élastique ;
- des terminaisons de la gorge hélicoïdale sur la face externe du coulisseau cylindrique forment des butées configurées pour entrer en contact avec le doigt fixe du cadre support de manière à définir les positions extrémales du coulisseau dans sa translation le long de son axe de déplacement ;
- le dispositif comporte un axe central disposé à l'intérieur de l'extrémité creuse de l'arbre enrouleur de manière à dépasser de ladite extrémité ;
- l'axe central est configuré pour se déplacer en translation à l'intérieur de l'extrémité creuse de l'arbre enrouleur suivant l'axe d'enroulement ;
- le coulisseau est solidaire de l'axe central ;
- une extrémité de l'arbre enrouleur présente un épaulement ;
- le coulisseau cylindrique et l'élément élastique sont disposés coaxialement à cet épaulement de manière à être mobiles en translation sur cet épaulement suivant l'axe d'enroulement ; et
- une douille à billes est interposée entre l'épaulement de l'extrémité de l'arbre enrouleur et le coulisseau cylindrique.

Il est entendu que l'ensemble des caractéristiques et des configurations précédemment données ne sont en rien limitatives. D'autres caractéristiques, détails et avantages de l'invention ressortiront plus clairement à la lecture de la description détaillée donnée ci-après, et de plusieurs exemples de réalisation donnés à titre indicatif et non limitatif en référence aux dessins schématiques annexés, sur lesquels :
La figure 1 [Fig. 1] illustre de façon schématique, en vue de côté, la face avant d'un véhicule automobile comprenant un dispositif d'obturation d'entrée d'air selon l'invention ainsi qu'un module de refroidissement ;
La figure 2a [Fig. 2a] illustre, en vue schématique de face, un dispositif d'obturation d'entrée d'air où le rideau est en position ouverte ;
La figure 2b [Fig. 2b] est une figure similaire à la figure 2a où le rideau est en position fermée ;
La figure 3 [Fig. 3] illustre, en vue schématique de coupe suivant le plan A-A, le dispositif de la Figure 2a ;
La figure 4a [Fig. 4a] est une figure schématique du système de rappel automatique du rideau en position ouverte du dispositif de la Figure 2a ;
La figure 4b [Fig. 4b] est une figure schématique similaire à la figure 4a et illustre le système de rappel automatique du rideau en position fermée du dispositif de la Figure 2b ;
La figure 5 [Fig. 5] est une vue schématique du coulisseau en déplacement étape par étape.

Les éléments identiques sur les différentes figures portent les mêmes références.

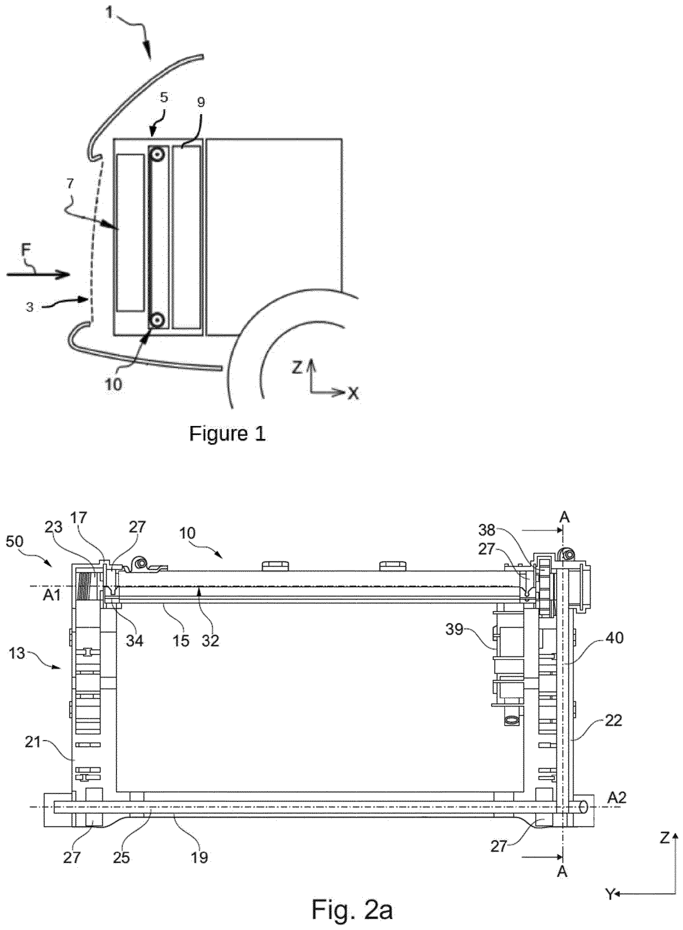

La figure 1 illustre, selon une vue en coupe de côté, un dispositif d'obturation d'entrée d'air 10 d'un flux d'air F disposé à l'avant d'un véhicule automobile 1. Le flux d'air F s'écoule sensiblement parallèlement à une direction X qui correspond à l'axe longitudinal du véhicule automobile 1. Le dispositif d'obturation d'entrée d'air 10 est notamment agencé derrière une calandre 3 qui équipe la face avant du véhicule automobile 1. Un module de refroidissement 5 qui comporte au moins un échangeur de chaleur 7, 9 destiné à être traversé par le flux d'air F pénétrant à l'intérieur du véhicule automobile 1 via la calandre 3 est également placée derrière cette dernière. Le ou les échangeurs de chaleur 7, 9 s'étendent dans des plans parallèles à ceux générés par les directions Y et Z du trièdre XYZ. Dans l'exemple illustré sur la figure 1, le module de refroidissement 5 comporte plus exactement deux échangeurs de chaleur 7 et 9 qui sont disposés de part et d'autre du dispositif d'obturation 10 suivant l'axe X.

Le module de refroidissement 5 comprend par exemple un échangeur de chaleur amont 7 selon le sens de circulation du flux d'air F (situé à gauche sur la fig. 1) et un échangeur de chaleur aval 9 (situé à droite sur la fig. 1) agencés en série selon l'axe longitudinal X du véhicule automobile 1. Dans cet agencement particulier, c'est l'échangeur de chaleur amont 7 qui est traversé en premier par le flux d'air F et l'échangeur de chaleur aval 9 en deuxième.

L'échangeur de chaleur amont 7 est par exemple un radiateur de refroidissement, dit basse température, qui sert à refroidir un liquide de refroidissement d'une boucle d'échange de chaleur, dite basse température, et qui comprend, notamment, un condenseur de climatisation et/ou un refroidisseur d'air de suralimentation. L'échangeur de chaleur aval 9 est, par exemple, un radiateur de refroidissement haute température destiné à refroidir un liquide de refroidissement d'une boucle d'échange de chaleur comprenant un moteur du véhicule. L'air qui traverse cet échangeur aval 9 refroidit le liquide de refroidissement du moteur.

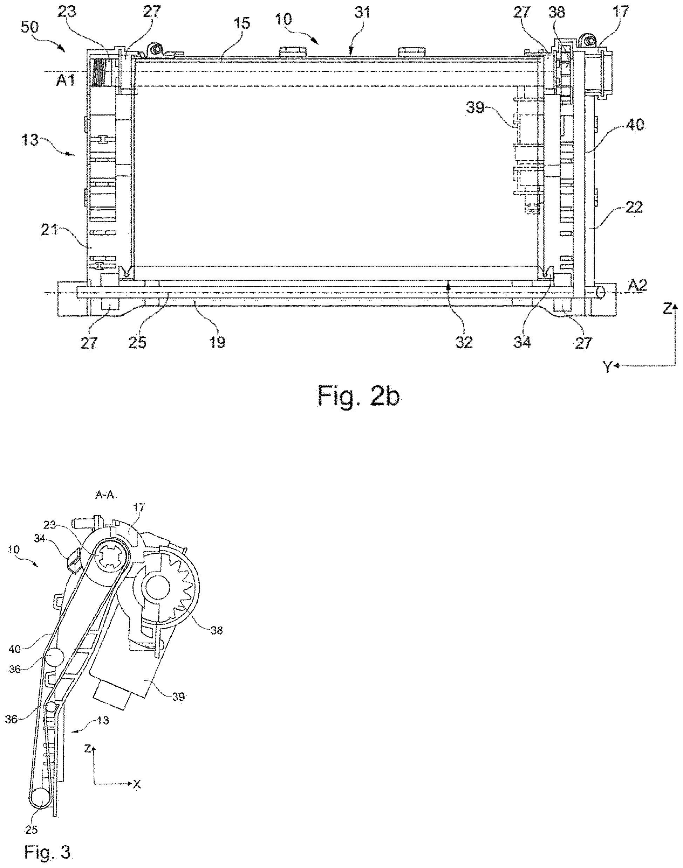

Comme le montrent par exemple les figures 2a et 2b, le dispositif d'obturation d'entrée d'air 10 comprend un cadre support 13 configuré pour servir de support à un rideau 15. Le cadre support 13 comporte plus précisément une première traverse 17 et une deuxième traverse 19 opposée à la première traverse 17. La première traverse 17 et la deuxième traverse 19 sont parallèles entre elles et orientées de manière sensiblement horizontale suivant la largeur du véhicule. Sur les figures 2a et 2b, la première traverse 17 et la deuxième traverse 19 sont orientées de suivant la direction Y.

Le cadre support 13 comprend également deux montants latéraux 21, 22 qui s'étendent entre les extrémités de la première traverse 17 et de la deuxième traverse 19 du cadre support 13 de façon à définir au moins une ouverture de passage destinée à être emprunté par le flux d'air F traversant la calandre 3 de la face avant du véhicule automobile 1. Les deux montants latéraux 21, 22 sont orientées de manière sensiblement verticale suivant la direction Z.

Le cadre support 13 du dispositif d'obturation d'entrée d'air 10 est notamment rigide, il est par exemple réalisé en matière plastique. La première et la deuxième traverses 17 et 19 ainsi que les montants latéraux 21 et 22 sont notamment obtenues par moulage par injection. Afin d'améliorer la rigidité dudit cadre support 13 ce dernier peut être moulé en une seule pièce.

Le cadre support 13 sert de support à un rideau 15 mobile entre une position fermée (illustrée sur la figure 2b) dans laquelle le rideau 15 recouvre au moins partiellement l'ouverture de passage définie par l'étendue du cadre support 13 et une position ouverte (illustrée sur la figure 2a) dans laquelle ledit rideau 15 laisse passer le flux d'air F entrant au travers de l'ouverture de passage.

Le rideau 15 comporte une première bordure 31 fixée à un premier arbre enrouleur 23 s'étendant sur le cadre support 13 le long d'un des côtés de l'ouverture de passage. Le rideau 15 comporte également une deuxième bordure 32 opposée à sa première bordure 31. La deuxième bordure 32 du rideau 15 peut être solidaire d'une tige 34 qui peut notamment rigidifier ladite deuxième bordure 32. Les extrémités de la tige 34 peuvent par ailleurs être agencées dans des rails disposés sur les montants latéraux 21 et 22 du cadre 13. La tige 34 permet ainsi de maintenir le rideau 15 contre le cadre support 13 et de guider le rideau 15 dans son déplacement entre sa position ouverte et sa position fermée.

Le rideau 15 peut notamment être obtenu par découpe. Il est par exemple réalisé à partir d'un matériau souple, telle qu'une toile à base de fibres de verre recouverte d'un revêtement étanche et déperlant.

Le rideau 15 peut notamment se présenter sous la forme d'une toile de forme rectangulaire ou trapézoïdale. Les dimensions du rideau 15 correspondent globalement à celles du cadre support 13. Les longueurs des première 31 et deuxième 32 bordures du rideau 15 correspondent approximativement et de manière respective à la longueur de la première traverse 17 et à celle de la deuxième traverse 19. L'écartement entre la première 31 et la deuxième 32 bordures du rideau 15 est notamment supérieure ou égale à la distance séparant la première 17 et la deuxième traverse 19 suivant la direction de fermeture et d'ouverture du rideau 15.

Dans le mode de réalisation du dispositif d'obturation 10 illustré sur les figures 2a, 2b et 3, le premier arbre enrouleur 23 est agencé au niveau de la première traverse 17 du cadre support 13. Le premier arbre enrouleur 23 s'étend par ailleurs parallèlement à la première traverse 17.

Le dispositif d'obturation 10 comprend également un deuxième arbre enrouleur 25 s'étendant sur le cadre support 13, le long d'un côté de l'ouverture de passage opposé à celui portant le premier arbre enrouleurs 23. Le deuxième arbre enrouleur 25 est notamment agencé au niveau de la deuxième traverse 19 du cadre support 13. Le deuxième arbre enrouleur 25 s'étend par ailleurs parallèlement à la deuxième traverse 19 du cadre support 13.

Le premier 23 et le deuxième 25 arbres enrouleurs sont donc parallèles entre eux. Dans l'exemple illustré sur les figures 2a à 3, le premier arbre enrouleur 23 est agencé au-dessus du deuxième arbre enrouleur 25. Autrement dit, le premier arbre enrouleur 23 est plus proche du toit du véhicule automobile 1 tandis que le deuxième arbre enrouleur 25 est plus proche du soubassement du véhicule automobile 1.

Le premier 23 et le deuxième 25 arbres enrouleurs sont chacun reliés au cadre support 13 par des paliers 27 de manière à pouvoir tourner autour d'un axe d'enroulement A1, A2 propre à chaque arbre enrouleurs 23 ou 25. Ces axes d'enroulement A1, A2 sont préférentiellement parallèles aux première 17 et deuxième 19 traverses du cadre support 13.

Le premier arbre enrouleur 23 auquel est fixée la première bordure 31 du rideau 15 est relié à un dispositif d'entraînement 38 (visible sur les figures 2a et 3) de sorte à enrouler le rideau 15 autour dudit premier arbre enrouleur 23 pour l'amener en position ouverte et de sorte à dérouler le rideau 15 pour l'amener en position fermée. Ce dispositif d'entraînement 38 coopère par exemple avec un actionneur électrique 39 fixé au cadre support 13 et relié au premier ardre enrouleur 23 par un système d'engrenage (visible sur la figure 3).

Le dispositif d'obturation 10 comporte également un moyen de transfert 40 de la rotation du premier arbre enrouleur 23 au deuxième arbre enrouleur 25. Selon un premier mode de réalisation du moyen de transfert 40 illustré plus particulièrement sur la figure 3, celui-ci peut comporter une courroie crantée reliant le premier arbre enrouleur 23 et le deuxième arbre enrouleur 25 en passant par des poulies de tension 36 disposées sur le cadre support 13. Ainsi, lorsque le premier arbre enrouleur 23 est entraîné en rotation par le dispositif d'entraînement 38 sous l'effet de l'actionneur 39, la courroie crantée du moyen de transfert 40 entraîne en rotation le deuxième arbre enrouleur 25. Les crans de ce genre de courroie limitent les risques que cette dernière glisse sur les arbres enrouleur 23 et/ou 25 ou sur les poulies de tension 36 lorsqu'ils sont en rotation. Une telle courroie équipant le moyen de transfert 40 est peu énergivore et transmet efficacement le mouvement sans générer de bruits excessifs.

Selon un deuxième mode de réalisation (non représenté) du moyen de transfert 40, celui-ci peut comporter au moins un pignon disposé sur chacun des premier et deuxième arbre enrouleur 23 et 25. Lesdits pignons sont reliés par une chaîne de transmission de sorte que lorsque le premier arbre enrouleur 23 est entraîné en rotation par le dispositif d'entraînement 38, l'ensemble formé par les pignons et la chaîne entraîne en rotation le deuxième arbre enrouleur 25. Ce mode de réalisation se distingue avantageusement du mode de réalisation précédent par sa longue durée de vie.

Ainsi, lorsque le rideau 15 est enroulé autour du premier arbre enrouleur 23, ceci correspond à sa position ouverte et le flux d'air F peut circuler à travers l'ouverture de passage pour atteindre les échangeurs de chaleur 7, 9 du module de refroidissement 5 disposé derrière la calandre 3. Enrouler le rideau 15 autour du premier arbre enrouleur 23 auquel il est associé permet de le stocker de manière simple et compact lorsqu'il est dans sa position ouverte.

Lorsque le rideau 15 est déroulé (figure 2b), il s'étend entre la première 17 et la deuxième traverse 19 du cadre support 13 suivant la direction de fermeture et d'ouverture du rideau 15, faisant alors obstacle au flux d'air F en obturant ainsi l'ouverture de passage. Ceci correspond alors à sa position de fermeture.

En cas d'une défaillance du système d'ouverture regroupant entre autres le dispositif d'entraînement 38, l'actionneur 39 et le moyen de transfert 40 liant le premier 23 et le deuxième arbres enrouleurs 25, le rideau 15 peut rester bloqué en position de fermeture. Le fait de rester en position de fermeture peut être préjudiciable car cela limite la circulation du flux d'air F notamment à faible vitesse de roulement. Ceci peut entraîner une diminution du refroidissement qui peut potentiellement engendrer des surchauffes.

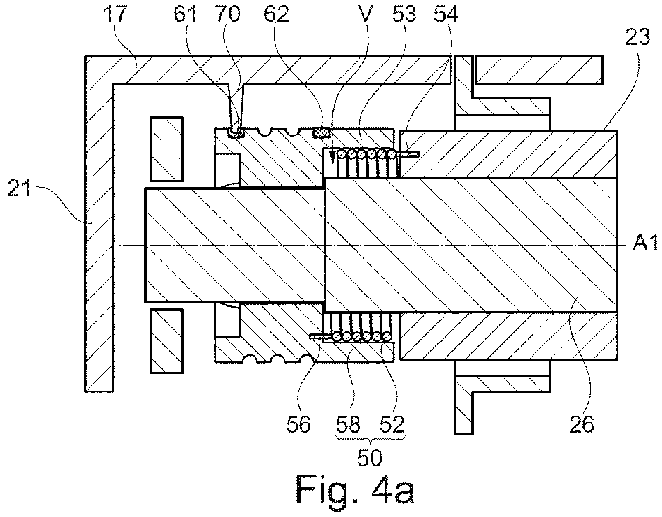

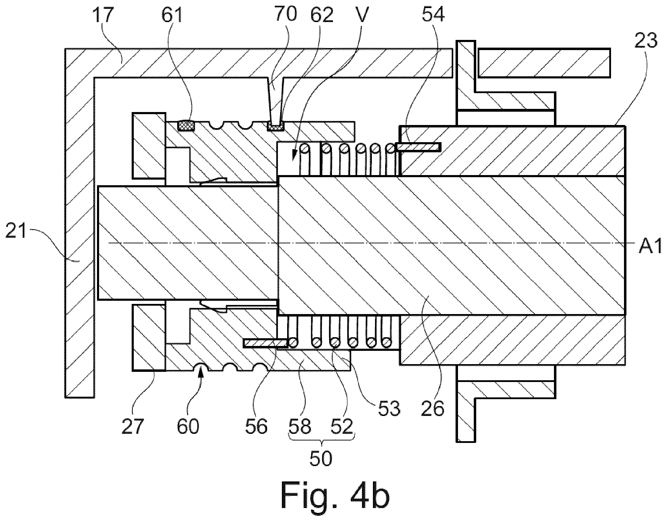

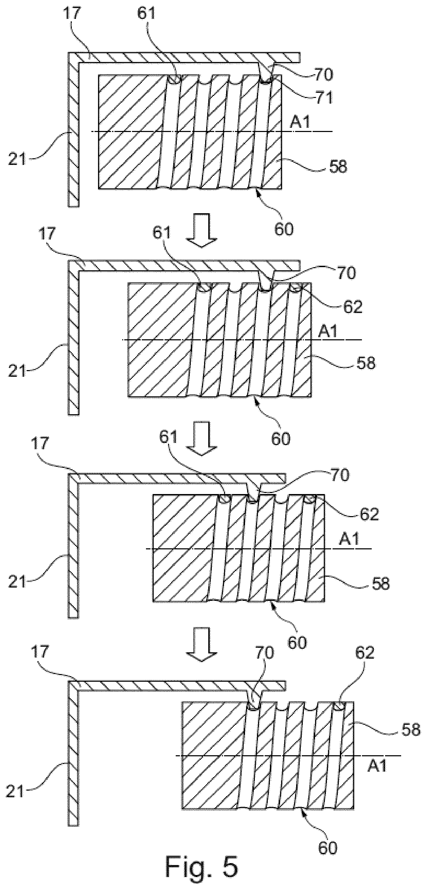

Afin de remédier à cet inconvénient, le dispositif d'obturation 10 comporte également un système de rappel 50 automatique du rideau 15 qui est illustré en détail sur les figures 4a, 4b et 5. Ce système de rappel 50 automatique est notamment disposé entre le cadre support 13 et l'arbre enrouleur 23 et permet de procéder à une ouverture automatique du rideau 15 dans le cas où le système d'ouverture explicité précédemment est hors service.

Ce système de rappel 50 automatique est plus particulièrement disposé au niveau d'une extrémité de l'arbre enrouleur 23. Selon un mode de réalisation particulier du dispositif d'obturation 10 illustré sur les figures 2a et 2b, le dispositif d'entraînement 38 et le système de rappel 50 automatique du rideau 15 sont disposés sur des extrémités opposés du premier arbre enrouleur 23, c'est-à-dire dans les coins supérieurs du cadre support 13.

Le système de rappel 50 automatique comporte d'une part un élément élastique 52 en élongation selon l'axe d'enroulement A1 et d'autre part un coulisseau 58 cylindrique destiné à se déplacer en translation le long de l'axe d'enroulement A1 de l'arbre enrouleur 23 et en rotation autour de ce même axe A1.

L'élément élastique 52 et le coulisseau 58 sont solidaires en rotation avec le premier arbre enrouleur 23. Ainsi, lorsque ledit arbre 23 tourne autour de son axe d'enroulement A1, l'élément élastique 52 et le coulisseau 58 sont également entraînés en rotation autour de cet axe A1.

L'élément 52 est « élastique en élongation » dans le sens où il est déformable longitudinalement selon l'axe d'enroulement A1 du premier arbre enrouleur 23. L'élément élastique 52 est plus particulièrement configuré pour être étiré et éventuellement compressé le long de cet axe d'enroulement A1.

Selon le mode de réalisation illustré sur les figures 4a et 4b, l'élément élastique 52 peut se présenter sous la forme d'un ressort comportant des spires enroulées en hélice autour de l'axe d'enroulement A1 de l'arbre enrouleur 23. Dans ce mode de réalisation spécifique, l'élément élastique 52 s'apparente plus particulièrement à un ressort de traction. En plus de présenter un attrait économique, cette configuration spécifique de l'élément élastique 52 se démarque par un poids relativement faible et une compacité avantageuse au sein du système de rappel 50 automatique.

L'élément élastique 52 est disposé entre une extrémité de l'arbre enrouleur 23 et le coulisseau 58, il comporte plus précisément une première extrémité 54 fixée au premier arbre enrouleur 23 et une deuxième extrémité 56 fixée au coulisseau 58. D'un point de vue cinématique, l'élément élastique 52 est fixé par sa première extrémité 54 à l'arbre enrouleur 23 de sorte à être entraîné en rotation par ledit arbre enrouleur 23 et inversement. Autrement dit, lorsque l'arbre enrouleur 23 est entraîné en rotation par le dispositif d'entraînement 38, la première extrémité 54 de l'élément élastique 52 fixée à l'arbre enrouleur 23 est elle aussi entraînée en rotation autour de l'axe d'enroulement A1, provoquant ainsi la rotation de l'intégralité de l'élément élastique 52 autour de ce même axe A1.

Puisque la deuxième extrémité 56 de l'élément élastique 52 est fixée au coulisseau 58, ce dernier est lui aussi entraîné en rotation autour de l'axe d'enroulement A1 lorsque l'élément élastique 52 tourne autour de l'axe d'enroulement A1. Autrement dit, le coulisseau 58 est fixé à la deuxième extrémité 56 de l'élément élastique 52 de sorte à être entraîné indirectement en rotation par l'arbre enrouleur 23 et inversement.

Par « inversement », l'on comprend ici qu'une rotation autour de l'axe d'enroulement A1 initiée par le coulisseau 58 peut entraîner en rotation aussi bien l'élément élastique 52 que l'arbre enrouleur 23 autour de ce même axe A1 en l'absence d'une résistance au mouvement manifestée du côté du dispositif d'entraînement 38.

Le coulisseau 58 est destiné à se déplacer en translation le long de l'axe d'enroulement A1 de l'arbre enrouleur 23 en plus de sa rotation autour de ce même axe A1 induite indirectement par l'arbre enrouleur 23. Le coulisseau 58 est de forme cylindrique et comporte sur sa surface externe une gorge hélicoïdale 60 semblable à un pas de vis. Dans une zone contigüe à l'endroit où est agencé le coulisseau 58, le cadre support 13 comporte un doigt fixe 70 configuré pour être inséré dans la gorge hélicoïdale 60 qui creuse la surface externe du coulisseau 58 cylindrique.

La gorge hélicoïdale 60 peut présenter des terminaisons 61, 62 qui forment des butées configurées pour entrer en contact avec le doigt fixe 70 du cadre support 13 de manière à définir les positions extrémales du coulisseau 58 dans sa translation le long de son axe A1 de déplacement.

Plus précisément, lorsque le rideau 15 est en position ouverte, une extrémité du doigt fixe 70 est en contact avec une première terminaison 61 de la gorge hélicoïdale 60, comme illustré sur la figure 4a. Le coulisseau 58 est alors au plus proche de l'extrémité de l'arbre enrouleur 23 et l'élément élastique 52 est comprimé. Dans le cas où l'élément élastique 52 est un ressort hélicoïdal, les spires dudit ressort sont très proches les unes des autres.

Inversement, lorsque le rideau 15 est en position fermée, l'extrémité du doigt fixe 70 est en contact avec une deuxième terminaison 62 de la rainure hélicoïdale 60, comme illustré sur la figure 4b. Le coulisseau 58 est alors plus proche du montant latéral 21 du cadre support 13 que dans sa position précédente et l'élément élastique 52 est étiré.

La coopération entre le doigt fixe 70 et la gorge hélicoïdale 60 du coulisseau 58 impose un couplement entre la translation du coulisseau 58 le long de l'axe d'enroulement A1 et la rotation du coulisseau 58 autour de ce même axe A1. La course en translation du coulisseau 58 est ainsi paramétrée par le nombre de spires de la gorge hélicoïdale 60 sur la surface externe du coulisseau 58 et par l'écart entre deux spires voisines de ladite gorge 60. Plus précisément, chaque rotation du coulisseau 58 autour de l'axe d'enroulement A1 décale le coulisseau 58 en translation le long de cet axe A1 de sorte que le doigt fixe 70 du cadre support 13 est positionné dans l'une des spires voisines par rapport à la spire dans laquelle il était situé précédemment. Ceci est plus particulièrement illustré sur la figure 5 sur laquelle est représenté étape par étape le déplacement du coulisseau 58 depuis le moment où le doigt fixe 70 est en contact avec la terminaison 62 de la gorge hélicoïdale 60 (position fermée du rideau 15) jusqu'au moment où le doigt fixe 70 est en contact avec la terminaison 61 de la gorge hélicoïdale 60 (position ouverte du rideau 15).

Dans le but d'éviter une expansion du diamètre des spires de l'élément élastique 52 dans une direction radiale, perpendiculaire à l'axe d'enroulement A1, le coulisseau 58 peut présenter à son extrémité liée à l'élément élastique 52 une paroi 53 formant un volume de logement V cylindrique destiné à accueillir au moins une partie des spires de l'élément élastique 52. Le nombre de spires, leur espacement et le volume de logement V cylindrique délimité par la paroi 53 à l'extrémité du coulisseau 58 peuvent être dimensionnés de telle sorte que l'ensemble des spires ou du moins une partie des spires de l'élément élastique 52 comprimé ou au repos se trouve à l'intérieur dudit volume de logement V, comme dans l'exemple de la figure 4a. La paroi 53 formant le volume de logement V permet ainsi de protéger l'élément élastique 52 d'une éventuelle pollution extérieure (eau, poussière, boue, ...). La paroi 53 formant le volume de logement V offre également un arrangement compact des composants 52, 58 du système de rappel 50 automatique du rideau 15 au sein du dispositif d'obturation 10.

Afin de gagner en compacité, l'extrémité de l'arbre enrouleur 23 à proximité de laquelle est agencé le système de rappel 50 automatique du rideau 15 peut être creuse. Le dispositif 10 peut alors comporter un axe central 26 disposé à l'intérieur de l'extrémité creuse de l'arbre enrouleur 23 de manière à ce que l'axe centrale 26 dépasse de ladite extrémité creuse. Ce mode de réalisation est plus particulièrement illustré sur les figures 4a, 4b et 5.

Sur ces mêmes figures, l'axe central 26 est relié au cadre support 13 par un palier 27 de manière à pouvoir tourner autour de l'axe d'enroulement A1.

L'axe central 26 est configuré pour se déplacer en translation suivant l'axe d'enroulement A1 à l'intérieur de l'extrémité creuse de l'arbre enrouleur 23. Le coulisseau 58 est solidaire de cet axe central 26 de manière à se déplacer en translation avec lui. L'axe central 26 permet ainsi un guidage efficace du coulisseau 58 par rapport à l'arbre enrouleur 23 lors de ses déplacements en translation suivant l'axe d'enroulement A1. L'axe central 26 évite par ailleurs un rétrécissement du diamètre des spires de l'élément élastique 52 dans une direction radiale, perpendiculaire à l'axe d'enroulement A1.

Selon un autre mode de réalisation non illustré du système de rappel 50 automatique du rideau 15, l'extrémité de l'arbre enrouleur 23 à proximité de laquelle est agencé ledit système de rappel 50 présente un épaulement. Le coulisseau 58 cylindrique et l'élément élastique de rappel 52 sont alors disposés sur cet épaulement de manière à être mobile sur la surface dudit épaulement suivant l'axe d'enroulement A1. Dans ce mode de réalisation particulier, une douille à billes (non représentée sur les figures) peut être interposée entre l'épaulement de l'extrémité de l'arbre enrouleur 23 et le coulisseau 58 pour permettre un guidage précis dans la translation rectiligne du coulisseau 58 le long de l'axe d'enroulement A1 en plus de permettre la rotation du coulisseau 58 autour de ce même axe A1. Ce mode de réalisation peut permettre de réduire les frottements entre les pièces en plus d'augmenter la capacité de charge au sein de cette liaison.

Lorsque le rideau 15 est déroulé depuis sa position ouverte vers sa position fermée, le doigt 70 coopère avec la gorge hélicoïdale 60 sur la surface du coulisseau 58 qui est entraîné en rotation par l'arbre enrouleur 23 via l'élément élastique 52. Cette coopération entre le doigt 70 et la gorge hélicoïdale 60 engendre ainsi un déplacement du coulisseau 58 en translation suivant l'axe d'enroulement A1, provoquant ainsi un allongement de l'élément élastique 52 en élongation suivant ce même axe A1. Pendant ce déplacement, la première extrémité 54 et la deuxième extrémité 56 de l'élément élastique 52 sont éloignées l'une de l'autre. Dans le cas où l'élément élastique 52 est un ressort avec des spires enroulées autour de l'axe d'enroulement A1, ces spires sont alors écartées les unes des autres. L'élément élastique 52 accumule alors de l'énergie élastique.

Si le dispositif d'entraînement 38 venait à être hors service, l'énergie accumulée via l'élément élastique 52 peut être libérée de manière à provoquer un déplacement du coulisseau 58 qui entraîne en rotation l'arbre enrouleur 23 autour de l'axe d'enroulement A1 de manière à ramener le rideau 15 dans sa position ouverte. La coopération entre le doigt 70 et la gorge hélicoïdale 60 sur la surface du coulisseau 58 déplace celui-ci en translation et en rotation jusqu'à ce que le doigt 70 se retrouve bloqué dans la terminaison 61 de la gorge hélicoïdale 60. Le rideau 15 est alors enroulé autour de l'arbre enrouleur 23 et libère l'ouverture de passage à travers le cadre support 13, permettant ainsi au flux d'air F de circuler à travers cette ouverture. Il est ainsi possible de rapatrier le rideau 15 dans sa position ouverte sans avoir forcément recours au dispositif d'entraînement 38. Le système de rappel 50 automatique peut notamment servir dans des situations d'urgence.

## Revendications

1. Dispositif d'obturation (10) d'entrée d'air pour un véhicule automobile (1), le dispositif d'obturation comprenant un cadre support (13) comportant une première (17) et une deuxième traverse (19) parallèles entre elles et reliées par des montants latéraux (21, 22) de sorte à définir au moins une ouverture de passage d'un flux d'air (F) entrant, ledit dispositif (10) comportant au moins un rideau (15) mobile entre une position fermée dans laquelle le rideau (15) recouvre au moins partiellement l'ouverture de passage et une position ouverte dans laquelle ledit rideau (15) laisse passer le flux d'air (F) entrant au travers de l'ouverture de passage, ledit rideau (15) comportant une bordure (31) fixée à un arbre enrouleur (23) s'étendant sur le cadre support (13) le long d'un des côtés de l'ouverture de passage, l'arbre enrouleur (23) étant relié à un dispositif d'entraînement (38) de sorte à enrouler le rideau (15) autour dudit arbre enrouleur (23) pour l'amener en position ouverte et de sorte à dérouler le rideau (15) pour l'amener en position fermée, le dispositif d'obturation comprenant également un système de rappel (50) automatique du rideau (15), **caractérisé en ce que** le système de rappel (50) automatique du rideau (15) comporte :
- un élément élastique (52) en élongation selon l'axe d'enroulement (A1) de l'arbre enrouleur (23), ledit élément élastique (52) étant fixé à une première de ses extrémités (54) à l'arbre enrouleur (23) de sorte à être entraîné en rotation par ledit arbre enrouleur (23) et inversement,
- un coulisseau (58) cylindrique destiné à se déplacer en translation le long de l'axe d'enroulement (A1) de l'arbre enrouleur (23) et en rotation autour de ce même axe (A1), ledit coulisseau (58) étant fixé à une deuxième extrémité (56) de l'élément élastique (52) de sorte à être entraîné indirectement en rotation par l'arbre enrouleur (23) et inversement, ledit coulisseau (58) comportant également sur sa surface externe une gorge hélicoïdale (60), le cadre support (13) comportant un doigt fixe (70) configuré pour être inséré dans la gorge hélicoïdale (60) du coulisseau (58).

2. Dispositif selon la revendication précédente, **caractérisé en ce que** l'élément élastique (52) du système de rappel (50) automatique du rideau (15) est un ressort comportant des spires enroulées en hélice autour de l'axe (A1) d'enroulement de premier arbre enrouleur (23).

3. Dispositif selon la revendication précédente, **caractérisé en ce que** l'élément élastique (52) est un ressort de traction et **en ce que** le coulisseau (58) cylindrique présente à son extrémité liée à l'élément élastique (52) une paroi (53) formant un volume de logement (V) destiné à accueillir au moins une partie des spires de l'élément élastique (52).

4. Dispositif selon l'une quelconque des revendications précédentes, caractérisé et en ce que des terminaisons (61, 62) de la gorge hélicoïdale (60) sur la face externe du coulisseau (58) cylindrique forment des butées configurées pour entrer en contact avec le doigt fixe (70) du cadre support (13) de manière à définir les positions extrémales du coulisseau (58) dans sa translation le long de son axe (A) de déplacement.

5. Dispositif selon l'une quelconque des revendications précédentes, **caractérisé en ce qu'**il comporte un axe central (26) disposé à l'intérieur de l'extrémité creuse de l'arbre enrouleur (23) de manière à dépasser de ladite extrémité, l'axe central (26) étant configuré pour se déplacer en translation à l'intérieur de l'extrémité creuse de l'arbre enrouleur (23) suivant l'axe d'enroulement (A1) et **en ce que** le coulisseau (58) est solidaire de cet axe central (26).

6. Dispositif selon l'une quelconque des revendications 1 à 4, **caractérisé en ce qu'**une extrémité de l'arbre enrouleur (23) présente un épaulement et **en ce que** le coulisseau (58) cylindrique et l'élément élastique (52) sont disposés coaxialement à cet épaulement de manière à être mobiles en translation sur cet épaulement suivant l'axe d'enroulement (A1).

7. Dispositif selon la revendication précédente, **caractérisé en ce qu'**une douille à billes est interposée entre l'épaulement de l'extrémité de l'arbre enrouleur (23) et le coulisseau (58) cylindrique.

## Patentansprüche

1. Lufteinlassverschlussvorrichtung (10) für ein Kraftfahrzeug (1), wobei die Verschlussvorrichtung einen Tragrahmen (13) umfasst, der eine erste (17) und eine zweite Querstrebe (19) aufweist, die zueinander parallel und durch seitliche Stützen (21, 22) verbunden sind, so dass mindestens eine Durchflussöffnung für einen einströmenden Luftstrom (F) definiert wird, wobei die Vorrichtung (10) mindestens einen Vorhang (15) aufweist, der zwischen einer geschlossenen Position, in welcher der Vorhang (15) die Durchflussöffnung wenigstens teilweise bedeckt, und einer geöffneten Position, in welcher der Vorhang (15) den durch die Durchflussöffnung einströmenden Luftstrom (F) durchlässt, beweglich ist, wobei der Vorhang (15) einen Rand (31) aufweist, der an einer Wickelwelle (23) befestigt ist, die sich am Tragrahmen (13) entlang einer der Seiten der Durchflussöffnung erstreckt, wobei die Wickelwelle (23) mit einer Antriebsvorrichtung (38) verbunden ist, um den Vorhang (15) auf die Wickelwelle (23) aufzuwickeln, um ihn in die geöffnete Position zu bewegen, und um den Vorhang (15) abzuwickeln, um ihn in die geschlossene Position zu bewegen, wobei die Verschlussvorrichtung außerdem ein automatisches Rückstellsystem (50) für den Vorhang (15) umfasst, **dadurch gekennzeichnet, dass** das automatische Rückstellsystem (50) für den Vorhang (15) aufweist:
- ein bei Dehnung entlang der Wickelachse (A1) der Wickelwelle (23) elastisches Element (52), wobei das elastische Element (52) an einem ersten seiner Enden (54) an der Wickelwelle (23) derart befestigt ist, dass es von der Wickelwelle (23) drehend angetrieben wird, und umgekehrt,
- ein zylindrisches Gleitstück (58), das dazu bestimmt ist, sich translatorisch entlang der Wickelachse (A1) der Wickelwelle (23) und rotatorisch um dieselbe Achse (A1) zu bewegen, wobei das Gleitstück (58) an einem zweiten Ende (56) des elastischen Elements (52) derart befestigt ist, dass es von der Wickelwelle (23) indirekt drehend angetrieben wird, und umgekehrt, wobei das Gleitstück (58) außerdem auf seiner Außenfläche eine spiralförmige Nut (60) aufweist, wobei der Tragrahmen (13) einen feststehenden Finger (70) aufweist, der dafür ausgelegt ist, in die spiralförmige Nut (60) des Gleitstücks (58) eingesetzt zu werden.

2. Vorrichtung nach dem vorhergehenden Anspruch, **dadurch gekennzeichnet, dass** das elastische Element (52) des automatischen Rückstellsystems (50) für den Vorhang (15) eine Feder ist, die Windungen aufweist, die spiralförmig um die Wickelachse (A1) der ersten Wickelwelle (23) gewickelt sind.

3. Vorrichtung nach dem vorhergehenden Anspruch, **dadurch gekennzeichnet, dass** das elastische Element (52) eine Zugfeder ist, und dadurch, dass das zylindrische Gleitstück (58) an seinem Ende, das mit dem elastischen Element (52) verbunden ist, eine Wand (53) aufweist, die ein Aufnahmevolumen (V) bildet, das dazu bestimmt ist, wenigstens einen Teil der Windungen des elastischen Elements (52) aufzunehmen.

4. Vorrichtung nach einem der vorhergehenden Ansprüche, **dadurch gekennzeichnet, dass** Abschlüsse (61, 62) der spiralförmigen Nut (60) auf der Außenfläche des zylindrischen Gleitstücks (58) Anschläge bilden, die dafür ausgelegt sind, mit dem feststehenden Finger (70) des Tragrahmens (13) in Kontakt zu kommen, um so die Endpositionen des Gleitstücks (58) bei seiner Translation entlang seiner Bewegungsachse (A) zu definieren.

5. Vorrichtung nach einem der vorhergehenden Ansprüche, **dadurch gekennzeichnet, dass** sie eine zentrale Achse (26) aufweist, die im Inneren des hohlen Endes der Wickelwelle (23) derart angeordnet ist, dass sie aus diesem Ende herausragt, wobei die zentrale Achse (26) dafür ausgelegt ist, sich im Inneren des hohlen Endes der Wickelwelle (23) entlang der Wickelachse (A1) translatorisch zu bewegen, und dadurch, dass das Gleitstück (58) mit dieser zentralen Achse (26) fest verbunden ist.

6. Vorrichtung nach einem der Ansprüche 1 bis 4, **dadurch gekennzeichnet, dass** ein Ende der Wickelwelle (23) eine Schulter aufweist, und dadurch, dass das zylindrische Gleitstück (58) und das elastische Element (52) koaxial zu dieser Schulter angeordnet sind, so dass sie auf dieser Schulter entlang der Wickelachse (A1) translatorisch beweglich sind.

7. Vorrichtung nach dem vorhergehenden Anspruch, **dadurch gekennzeichnet, dass** eine Kugelhülse zwischen der Schulter des Endes der Wickelwelle (23) und dem zylindrischen Gleitstück (58) angeordnet ist.

## Claims

1. Air inlet shut-off device (10) for a motor vehicle (1), the shut-off device comprising a support frame (13) having a first (17) and a second crossmember (19) that are parallel to one another and connected by lateral uprights (21, 22) so as to define at least one opening for the passage of an incoming air flow (F), said device (10) having at least one curtain (15) that is able to move between a closed position in which the curtain (15) at least partially covers the passage opening and an open position in which said curtain (15) allows the incoming air flow (F) to pass through the passage opening, said curtain (15) having an edge (31) fastened to a roller shaft (23) extending on the support frame (13) along one of the sides of the passage opening, the roller shaft (23) being connected to a drive device (38) so as to roll up the curtain (15) around said roller shaft (23) to bring it into the open position and so as to unroll the curtain (15) to bring it into the closed position, the shut-off device also comprising an automatic return system (50) for the curtain (15), **characterized in that** the automatic return system (50) for the curtain (15) has:
- an element (52) that is elastic in elongation along the rolling axis (A1) of the roller shaft (23), said elastic element (52) being fastened at a first of its ends (54) to the roller shaft (23) so as to be driven in rotation by said roller shaft (23) and vice versa,
- a cylindrical slider (58) intended to move in translation along the rolling axis (A1) of the roller shaft (23) and in rotation about this same axis (A1), said slider (58) being fastened to a second end (56) of the elastic element (52) so as to be driven indirectly in rotation by the roller shaft (23) and vice versa, said slider (58) also having a helical groove (60) on its outer surface, the support frame (13) having a fixed finger (70) configured to be inserted in the helical groove (60) of the slider (58).

2. Device according to the preceding claim, **characterized in that** the elastic element (52) of the automatic return system (50) for the curtain (15) is a spring having turns wound in a helix around the rolling axis (A1) of the first roller shaft (23).

3. Device according to the preceding claim, **characterized in that** the elastic element (52) is a tension spring and **in that** the cylindrical slider (58) has, at its end connected to the elastic element (52), a wall (53) forming a housing volume (V) intended to accommodate at least some of the turns of the elastic element (52).

4. Device according to any one of the preceding claims, **characterized in that** endings (61, 62) of the helical groove (60) on the outer face of the cylindrical slider (58) form stops configured to come into contact with the fixed finger (70) of the support frame (13) so as to define the end positions of the slider (58) in its movement in translation along its axis (A) of movement.

5. Device according to any one of the preceding claims, **characterized in that** it has a central pin (26) disposed inside the hollow end of the roller shaft (23) so as to project from said end, the central pin (26) being configured to move in translation inside the hollow end of the roller shaft (23) along the rolling axis (A1), and **in that** the slider (58) is secured to this central pin (26) .

6. Device according to any one of Claims 1 to 4, **characterized in that** one end of the roller shaft (23) has a shoulder and **in that** the cylindrical slider (58) and the elastic element (52) are disposed coaxially with this shoulder so as to be able to move in translation on this shoulder along the rolling axis (A1).

7. Device according to the preceding claim, **characterized in that** a linear ball bearing is interposed between the shoulder of the end of the roller shaft (23) and the cylindrical slider (58).
